# NOUVEAU FASCICULE DE BREVET EUROPEEN

(11) **EP 1 907 308 B2**
(45) Date de publication et mention de la décision concernant l'opposition: **03.05.2017**
(45) Mention de la délivrance du brevet: 23.06.2010
(21) Numéro de dépôt: 06794491.8
(22) Date de dépôt: 20.07.2006
(51) Int. Cl.: B65H 57/00, B23K 9/00

(54) **GAINE POUR LE GUIDAGE D'UN FIL**
DRAHTFÜHRENDER MANTEL
WIRE GUIDING SHEATH

(30) Priorité: 22.07.2005 FR 0507810
(43) Date de publication de la demande: 09.04.2008
(73) Titulaire: I.A.B. Developpements, 21000 Dijon (FR)
(72) Inventeur: SANCHEZ, Lionel, F-21120 Til-chatel (FR)
(74) Mandataire: Thibault, Jean-Marc
(86) Numéro de dépôt international: PCT/FR2006/050738
(87) Numéro de publication internationale: WO 2007/010171

(56) Documents cités:
- WO-A1-2006/091075
- DE-A- 2 222 493
- DE-A1- 2 525 938
- DE-C- 449 929
- JP-A- H09 191 520
- US-A- 1 258 233
- US-A- 1 602 691
- US-A- 1 898 060
- US-A- 2 457 910
- US-A- 3 274 850
- US-A- 5 994 659
- US-B1- 6 729 606
- PATENT ABSTRACTS OF JAPAN vol. 1997, no. 11, 28 novembre 1997 (1997-11-28) & JP 09 191520 A (HITACHI CABLE LTP), 22 juillet 1997 (1997-07-22)

## Description

La présente invention concerne le domaine technique relatif à l'amenée ou au transport d'un fil, de toute nature et section, d'un lieu de conditionnement à un lieu d'utilisation.

L'objet de l'invention vise plus précisément une nouvelle gaine à l'intérieur de laquelle se déplace le fil à acheminer entre le lieu de conditionnement et le lieu d'utilisation.

L'objet de l'invention trouve une application préférée dans le transport d'un fil de soudure par la nécessité de mobilité au niveau de la zone de soudage et le besoin de protection contre les agressions extérieures (poussières, salissures).

Dans le domaine d'application préférée, il est connu d'utiliser un tuyau souple en plastique à l'intérieur duquel se déplace le fil de soudure entre son conditionnement (en bobine, touret, fût, couronne) et la zone de soudage. L'avance du fil est assurée par un ou plusieurs systèmes de galets motorisés. En fonction des applications, soudage manuel ou robotisé et des longueurs de la gaine, le ou les systèmes d'avancement motorisés seront placés à des endroits différents sur le parcours du fil.

D'une manière générale, il doit être considéré que l'acheminement continu d'un fil de soudure pose de réelles difficultés dues, notamment, à la longueur de la gaine, de la courbure prise par la gaine lors des opérations de soudage, de la tension du fil et du coefficient de frottement entre la gaine et le fil. Il est à noter que le problème de frottement évolue dans le temps et s'aggrave générant des à-coups dans l'avancement du fil, causés par une usure de la gaine et la formation de mini copeaux. Dans certains cas, il se produit un blocage total du fil à l'intérieur de la gaine. Il apparaît ainsi nécessaire de prévoir fréquemment le remplacement de la gaine, ce qui entraîne un surcoût dû au remplacement de la gaine et à l'arrêt du poste de soudage. Par ailleurs, les difficultés d'avancement du fil conduisent fréquemment à des défauts dans la qualité de soudage, nécessitant des coûts supplémentaires, soit pour réparer le défaut, soit pour la mise au rebut des pièces soudées. Une contrainte supplémentaire est liée au fait que la longueur de la gaine doit être relativement faible pour s'affranchir des problèmes d'usure, due sorte qu'une telle contrainte limite les possibilités de conception de la machine intégrant une telle gaine.

Dans le domaine de la mise en place de câbles, il est connu par le document JP 9191520, un boîtier de guidage pour un câble comportant une surface de guidage en saillie de laquelle s'étend un galet monté mobile en rotation. Ce document n'apporte pas une solution au problème du guidage d'un fil de soudure à l'intérieur d'une gaine soumise par ailleurs à des sollicitations lui imposant des courbures selon différentes directions.

De même, le brevet US 1,898,060 décrit une machine de soudure incorporant deux systèmes à galets montés perpendiculairement entre eux afin de redresser le fil de soudure avant son utilisation. Ce brevet n'apporte pas de solution au problème de guidage d'un fil de soudure entre son lieu de conditionnement et son lieu d'utilisation.

La présente invention vise donc à remédier aux inconvénients énoncés ci-dessus en proposant une gaine pour le guidage d'un fil, adaptée pour réduire le frottement du fil à l'intérieur de la gaine, même lorsque celle-ci est courbée selon différentes directions.

L'objet de invention vise également à proposer une gaine pour le guidage d'un fil, adaptée pour être de conception simple, tout en assurant sa fonction de guidage du fil.

Pour atteindre un tel objectif, la gaine selon l'invention est conforme à la revendication 1.

D'une manière avantageuse, les premiers et les deuxièmes moyens d'articulation sont réalisés par une articulation de même type, telle que à pivot, à rotule ou élastique.

Selon une variante préférée de réalisation, au moins l'un des axes d'un organe de roulement des deuxièmes ensembles de guidage s'étend selon une direction perpendiculaire de celle d'au moins un axe d'un organe de roulement des premiers ensembles de guidage et en ce que les premiers et deuxièmes moyens d'articulation possèdent des directions d'articulation au moins perpendiculaires entre elles.

Par exemple, les axes des organes de roulement, faisant partie d'un même ensemble de guidage, sont parallèles entre eux.

Pour simplifier la réalisation des supports, les supports de premier type des premiers ensembles de guidage sont identiques aux supports de deuxième type des deuxièmes ensembles de guidage.

Avantageusement, chaque support des ensembles de guidage est équipé d'un tube de guidage pour le fil s'étendant entre l'ensemble de guidage porté par ledit support et l'ensemble de guidage porté par le support amont ou aval.

La gaine de guidage selon l'invention comporte de préférence des moyens de butée permettant de limiter l'amplitude d'articulation des premiers et des deuxièmes moyens d'articulation.

Compte tenu de l'ambiance de mise en oeuvre de la gaine de guidage conforme à l'invention, cette dernière comporte une enveloppe de protection dans laquelle sont montés les supports des premiers et deuxièmes ensembles de guidage.

Avantageusement, l'enveloppe de protection intègre un ressort.

Un autre objet de l'invention est de proposer un système d'avance d'un fil à l'aide de moyens d'entraînement, comportant une gaine de guidage conforme à l'invention disposée entre le lieu de stockage du fil et le lieu d'utilisation du fil.

Diverses autres caractéristiques ressortent de la description faite ci-dessous en référence aux dessins annexés qui montrent, à titre d'exemples non limitatifs, des formes de réalisation de l'objet de l'invention.
La **fig. 1** est une vue schématique d'un exemple d'utilisation d'une gaine conforme à l'invention.
La **fig. 2** est une vue partielle d'un exemple de réalisation d'une gaine conforme à l'invention.
La **fig. 3** est une vue en perspective d'un tronçon de gaine, tel qu'illustré à la **fig. 2**.
La **fig. 4** est une vue en coupe prise sensiblement selon les lignes **IV-IV** de la **fig. 3**.
Les **fig. 5** à **7** sont des exemples de réalisation de l'ensemble de guidage conforme à l'invention.
Les **fig. 8** à **10** illustrent d'autres variantes de réalisation de la gaine conforme à l'invention.

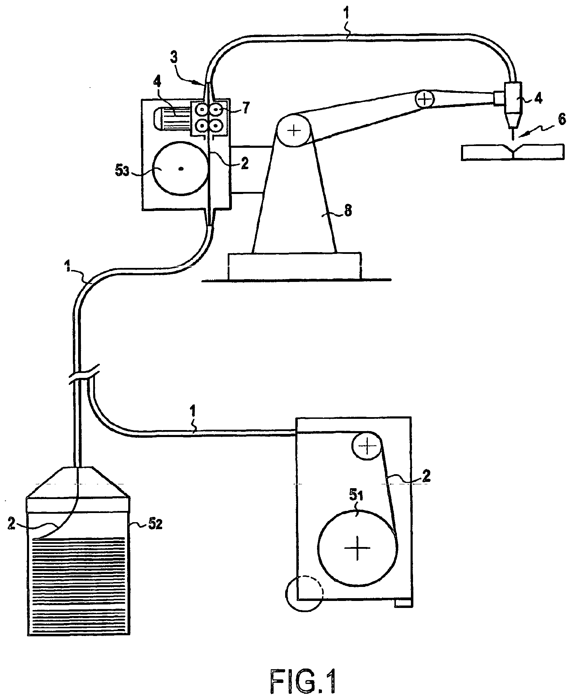

Tel que cela ressort plus précisément de la **fig. 1**, l'objet de l'invention concerne une gaine **1** assurant le guidage d'un fil **2** se déplaçant à l'intérieur de la gaine dans un chemin de guidage **3**, selon un sens d'avancement représenté par la flèche **F₁**. La gaine **1** conforme à l'invention est utilisée avec au moins un système d'avance **4** permettant d'acheminer le fil **2** d'un poste de stockage ou de conditionnement **5₁**, **5₂** ou **5₃** à un poste d'utilisation **6**. Le système d'avance **4** comporte des moyens d'entraînement **7** du fil de tout type connu en soi, tel que du type poussé, tiré, poussé-tiré ou poussé- poussé. Les moyens d'entraînement **7** ne seront pas décrits plus précisément car ils ne font pas partie de l'objet de l'invention et sont bien connus de l'homme du métier.

Le fil **2** est plein ou creux et présente une section par exemple circulaire ou autre. Le fil **2** est conditionné sous différentes formes, telles qu'en touret **5₁**, couronne, fût **5₂** ou en bobine **5₃**, comme illustré à la **fig. 1**. Selon une forme d'application préférée, le fil **2** est un fil de soudure guidé à l'intérieur de la gaine **1** conforme à l'invention, afin d'être acheminé jusqu'à un poste d'utilisation **6**, tel qu'un poste de soudure associé à un robot **8**. La gaine **1** selon l'invention peut ainsi être utilisée entre le poste de soudure **6** et le système d'avance **4** à proximité duquel est placée dans l'exemple illustré, la bobine **5₃**, ou entre le poste de soudure **6** et un conditionnement déporté tel un fût **5₂** ou un touret **5₁** par exemple.

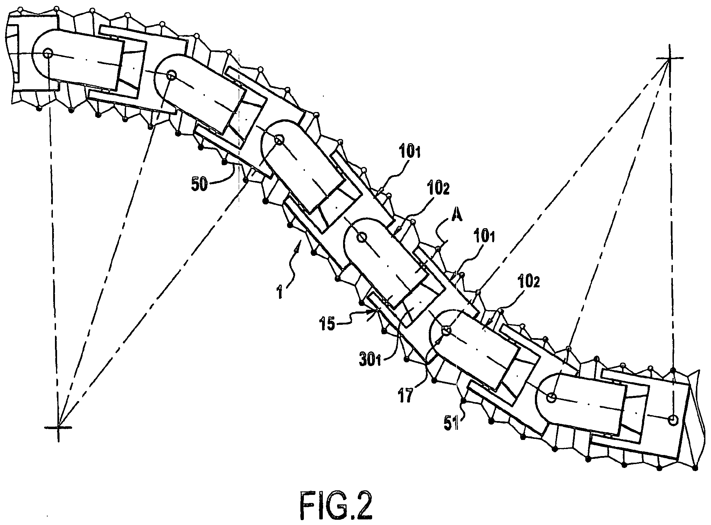

Les **fig. 2** à **4** illustrent une première variante de réalisation d'une gaine **1** conforme à l'invention comportant une série de supports de premier type **10₁** pour des premiers ensembles de guidage **11₁** pour le fil **2** et une série de supports de deuxième type **10₂** pour des deuxièmes ensembles de guidage **11₂** pour le fil. Les supports de premier type **10₁** et les supports de deuxième type **10₂** sont disposés, successivement et de manière alternée, de façon qu'en dehors des supports formant les deux extrémités de la gaine, un support d'un type donné se trouve intercalé entre deux supports d'un type différent.

Par souci de clarté, il sera considéré qu'un support d'un type donné est adjacent ou voisin, selon l'un de ses côtés, d'un support d'un type différent, dit amont, en considération du sens d'avancement du fil et, selon son côté opposé, d'un support différent, dit aval.

Selon une autre caractéristique de l'invention, chaque support d'un type **10₁**, **10₂** est articulé avec chacun des supports voisins ou adjacents d'un type différent. Ainsi, mis à part les supports délimitant chaque extrémité de la gaine, chaque support d'un type donné, par exemple de premier type **10₁**, est articulé, d'une part, à l'aide de premiers moyens d'articulation **15** avec le support aval de second type **10₂**, selon au moins une direction d'articulation **A** et, d'autre part, à l'aide de deuxièmes moyens d'articulation **17** avec le support amont de second type **10₂** selon au moins une direction d'articulation **B** différente de la direction d'articulation **A**. De la même façon, chaque support d'un second type **10₂** est articulé d'une part, à l'aide des premiers moyens d'articulation **15** avec le support amont de premier type **10₁** selon au moins une direction d'articulation **A** et, d'autre part, à l'aide de deuxièmes moyens d'articulation **17** avec le support aval de premier type **10₁** selon au moins une direction d'articulation **B**.

Avantageusement, les moyens d'articulation **15, 17** sont adaptés pour autoriser un mouvement des supports entre eux selon au moins deux directions d'articulation **A, B** perpendiculaires entre elles, de sorte que la gaine puisse suivre des courbures s'étendant dans des plans différents. Selon une caractéristique de réalisation, qui est illustrée plus précisément aux **fig. 2** à **4**, dans la suite de la description, les directions d'articulation **A** et **B** sont perpendiculaires entre elles et à la direction d'avancement du fil **2**.

Les supports de premier type **10₁** sont identiques aux supports de deuxième type **10₂**. Dans l'exemple considéré, les supports de premier type **10₁** sont décalés angulairement, selon l'axe de la gaine, de 90° par rapport aux supports de deuxième type **10₂**. Dans la suite de la description, les indices **1** et **2** des différents éléments constitutifs des supports seront rattachés, respectivement, aux supports de premier type **10₁** et aux supports de deuxième type **10₂.**

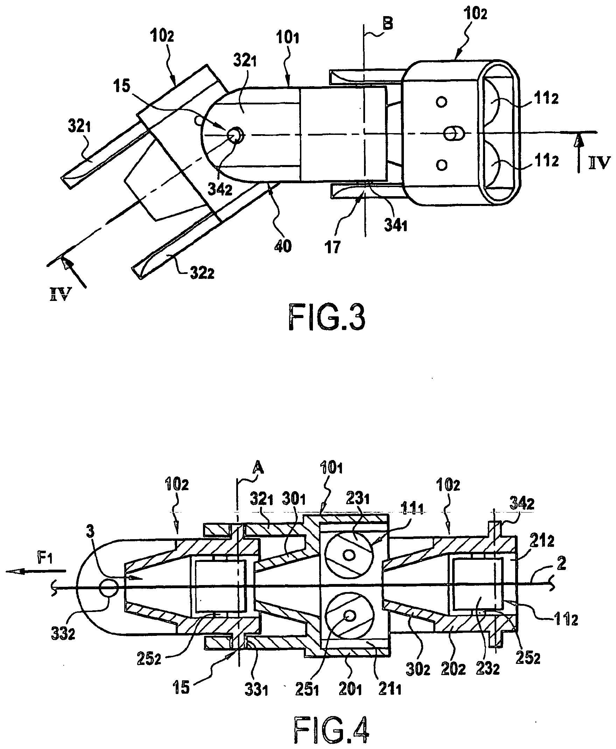

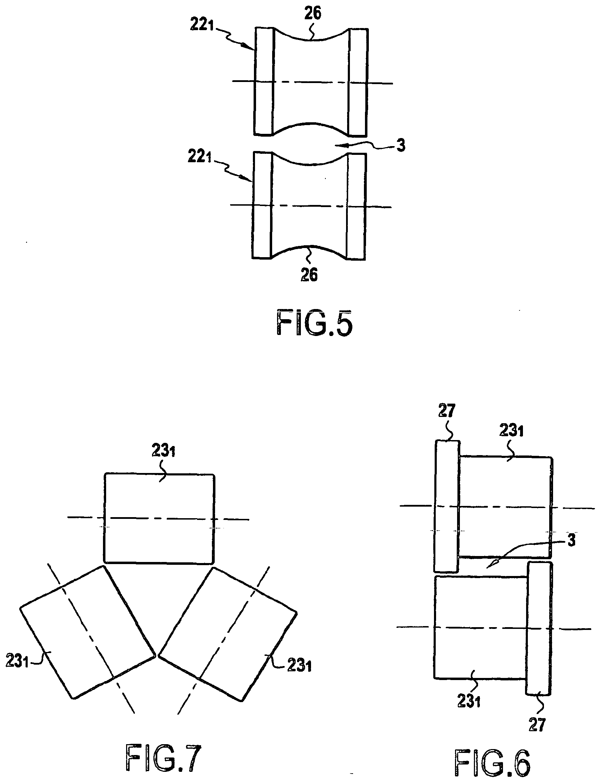

Chaque support **10₁**, **10₂** se présente sous la forme d'un corps tubulaire ou annulaire **20₁**, **20₂** délimitant, intérieurement, une cage **21₁**, **21₂** de montage pour un ensemble de guidage **11₁**, **11₂.** Selon la variante de réalisation illustrée, chaque ensemble de guidage **11₁**, **11₂** comporte des organes de roulement **23₁**, **23₂**, montés en vis-à-vis pour délimiter le chemin de guidage **3** pour le fil **2**. Chaque organe de roulement **23₁**, **23₂** est monté libre en rotation selon un axe **25₁**, **25₂** porté par le support **10₁**, **10₂.** Dans l'exemple illustré aux **fig. 3** et **4**, chaque ensemble de guidage **11₁**, **11₂** comporte deux organes de roulement **23₁**, **23₂** portés par des axes s'étendant parallèlement entre eux. Chaque organe de roulement **23₁**, **23₂**, peut être réalisé par un rouleau ou un galet, possédant une section droite transversale circulaire constante, comme illustré à la **fig. 4**, sans gorge ou avec une gorge **26**, comme illustré à la **fig. 5** ou avec une nervure latérale de retenue **27**, telle qu'illustrée à la **fig. 6**. De même, il est à noter que chaque ensemble de guidage **11₁**, **11₂** peut comporter un nombre d'organes de roulement différent de deux, tel que trois organes dont les axes sont décalés entre eux de 120° pour constituer un chemin de guidage **3** de section triangulaire, comme illustré à la **fig. 7**.

L'écartement des organes de roulement **23₁**, **23₂**, placés en vis-à-vis pour constituer un ensemble de guidage, est choisi de manière que le chemin de guidage **3** présente une section de passage supérieure au diamètre du fil. Cette section de passage est, avantageusement, choisie pour permettre le passage de fils de différents diamètres. Il doit être considéré que le fil **2** peut passer ainsi librement dans les parties de la gaine qui sont rectilignes ou droites, tandis que le fil **2** se trouve en contact avec les organes de roulement situés dans les parties de la gaine subissant une courbure.

Chaque corps **20₁**, **20₂** se prolonge avantageusement, à l'opposé de la cage de montage **21₁**, **21₂**, par un tube de guidage **30₁**, **30₂** pour le fil, délimitant ainsi le chemin de guidage **3** pour le fil. Chaque tube de guidage **30₁**, **30₂** s'étend ainsi, entre l'ensemble de guidage **11₁**, **11₂** porté par ledit support correspondant et l'ensemble de guidage porté par le support aval. En d'autres termes, chaque tube de guidage **30₁**, **30₂** assure une continuité de guidage pour le fil entre deux ensembles de guidage voisins ou consécutifs **11₁**, **11₂** portés par deux supports de type différent. Chaque tube de guidage **30₁**, **30₂** possède, de préférence, une section longitudinale de forme tronconique qui se rétrécit en direction du support aval.

Chaque corps **20₁**, **20₂** est pourvu, également, de deux bras **32₁**, **32₂**, s'étendant parallèlement entre eux et de part et d'autre du tube de guidage **30₁**, **30₂**. Les deux bras **32₁**, **32₂** sont pourvus chacun d'un orifice de réception **33₁**, **33₂** pour respectivement un pivot **34₂**, **34₁** aménagés sur les corps **20₁**, **20₂**. Les deux orifices de réception **33₁** d'un support sont alignés et sont adaptés pour recevoir les deux pivots **34₂** d'un support aval permettant de former les premiers moyens d'articulation **15**, tandis que les deux pivots **34₁** dudit support avec lesquels coopèrent les deux orifices **33₂** d'un support amont forment les deuxièmes moyens d'articulation **17**. Bien entendu, la position des orifices de réception **33₁**, **33₂** sur les supports-peut être inversée avec la position des pivots **34₁**, **34₂**.

Avantageusement, il s'ensuit que chaque articulation **A, B** est située au voisinage d'un ensemble de guidage **11₁**, **11₂**. De préférence, chaque articulation **A, B**, voisine d'un ensemble de guidage, s'étend sensiblement parallèlement à l'axe d'au moins un organe de roulement appartenant audit ensemble de guidage. Ainsi, tel que cela ressort plus précisément de la **fig. 4**, les moyens d'articulation **15** présentent par exemple, une direction d'articulation **A** qui est parallèle et proche des axes **25₂** des organes de roulement voisins tandis que les moyens d'articulation **17** possèdent une direction d'articulation **B** qui est parallèle et proche des axes **25₁**, des organes de roulement voisins.

Selon une autre caractéristique de l'invention, la gaine **1** comporte des moyens de butée **40** adaptés pour limiter l'amplitude des premiers **15** et des deuxièmes **17** moyens d'articulation. Dans l'exemple illustré, les moyens de limitation **40** sont formés par le tube de guidage **30₁**, **30₂** d'un support, adapté pour venir en butée sur le corps d'un support voisin. Par exemple, le décalage d'alignement entre deux supports consécutifs peut être limité à une valeur de l'ordre de 30°.

Il ressort de la description qui précède que la gaine **1** selon l'invention permet de guider le fil **2** lors de son avancement par l'intermédiaire, notamment, des organes de roulement **23₁, 23₂.** La résistance à l'avancement du fil est due, uniquement, au frottement de l'organe de roulement sur son axe. Le guidage du fil **2** est ainsi assuré, même si la gaine subit des déplacements, notamment au niveau de son lieu d'utilisation, entraînant des changements de courbure dans différents plans. En effet, la mise en oeuvre des moyens d'articulation **15, 17** dans deux plans différents, alternés d'un support à l'autre autorise la gaine à suivre différentes conformations.

Selon une caractéristique préférée de réalisation, l'ensemble des supports **10₁, 10₂** peut être monté à l'intérieur d'une enveloppe de protection **50,** comme illustré à la **fig. 2**. Cette enveloppe de protection **50** peut, éventuellement, être associée à un ressort à spirale **51** qui, dans l'exemple illustré, est directement intégré à l'enveloppe de protection. Un tel ressort **51** confère, à la gaine, une raideur déterminée contribuant aussi à assurer l'alignement des supports entre eux.

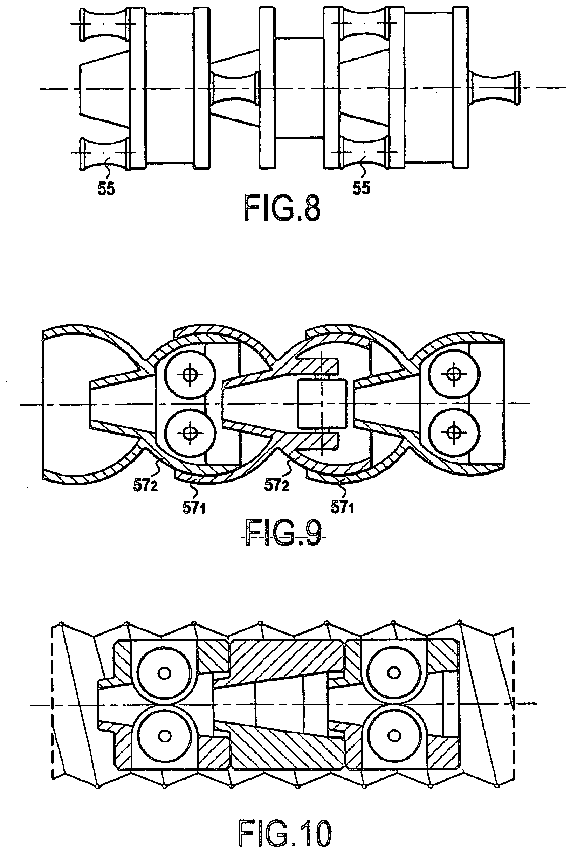

Bien entendu, les moyens d'articulation **15, 17** peuvent être réalisés de manière différente d'une articulation à pivot. Chaque articulation à pivot peut être remplacée par une liaison élastique mettant en oeuvre un ou plusieurs ressorts ou éléments élastiques **55,** comme illustré à la **fig. 8**, interposés entre les supports **10₁, 10₂.**

De même, les supports **10₁, 10₂** peuvent être reliés entre eux par des moyens d'articulation, du type à rotule, tels qu'illustrés à la **fig. 9****.** Selon cette variante de réalisation, chaque corps **20₁, 20₂** de support comporte ainsi, de part et d'autre, une partie hémisphérique respectivement **57₁, 57₂** coopérant chacune avec une partie hémisphérique complémentaire et opposée **57₂, 57₁** d'un support voisin. Chaque support se trouve donc assemblé à chaque support voisin, par une articulation à rotule autorisant un déplacement relatif angulaire des supports selon différentes directions.

Selon une autre variante de réalisation illustrée à la **fig. 10****,** il peut être prévu que les supports **10₁, 10₂** soient montés sans liaison mécanique entre eux mais en étant montés à l'intérieur d'une gaine **50** dans laquelle sont montés les supports coopérant entre eux par des conformations **60₁, 60₂,** aménagées sur les supports et coopérant entre elles pour assurer une articulation entre deux supports consécutifs ou voisins.

## Revendications

1. Gaine de guidage d'un fil **(2)** se déplaçant, selon un sens donné d'avancement, dans un chemin de guidage **(3)** aménagé à l'intérieur de la gaine, ladite gaine comportant :
• des supports de premier type **(10₁)** pour des premiers ensembles de guidage **(11₁)** pour le fil, comportant chacun des organes de roulement **(23₁),** montés en vis-à-vis pour définir entre eux une partie du chemin de guidage du fil, chaque organe de roulement étant monté libre en rotation selon un axe **(25₁)** porté par un support, **caractérisée en ce qu**'elle comporte des supports de deuxième type **(10₂)** pour des deuxièmes ensembles de guidage **(11₂)** pour le fil, comportant chacun des organes de roulement **(23₂)** montés, d'une part, en vis-à-vis pour définir entre eux une partie du chemin de guidage du fil et, d'autre part, chacun libre en rotation selon un axe **(25₂)** porté par le support, au moins l'un des axes d'un organe de roulement des deuxièmes ensembles de guidage s'étendant selon une direction différente de celle d'au moins un axe d'un organe de roulement des premiers ensembles de guidage, les supports des deuxièmes ensembles de guidage étant disposés de manière alternée avec les supports des premiers ensembles de guidage,
• et, pour chaque support d'un type encadré par des supports amont et aval d'un autre type, des premiers moyens d'articulation **(15)** selon au moins une direction d'articulation **(A)** entre un support d'un type avec le support amont d'un autre type et des deuxièmes moyens d'articulation **(17)**, entre ledit support d'un type avec le support aval d'un autre type, selon au moins une direction d'articulation différente de la direction d'articulation **(B)** entre le dit support et le support amont, les premiers **(15)** et les deuxièmes **(17)** moyens d'articulation étant réalisés par une articulation de même type, telle que à pivot, à rotule ou élastique,
• les supports de premier type **(10₁)** des premiers ensembles de guidage **(11₁)** étant identiques aux supports **(10₂)** de deuxième type des deuxièmes ensembles de guidage **(11₂)**, chaque support **(10₁, 10₂)** des ensembles de guidage étant équipé d'un tube de guidage **(30₁, 30₂)** pour le fil **(2)** s'étendant entre l'ensemble de guidage porté par ledit support et l'ensemble de guidage porté par le support amont ou aval.

2. Gaine de guidage selon la revendication 1, **caractérisée en ce qu**'au moins l'un des axes d'un organe de roulement **(23₁, 23₂)** des deuxièmes ensembles de guidage **(11₂)** s'étend selon une direction perpendiculaire de celle d'au moins un axe d'un organe de roulement des premiers ensembles de guidage **(11₁)** et **en ce que** les premiers **(15)** et deuxièmes **(17)** moyens d'articulation possèdent des directions d'articulation au moins perpendiculaires entre elles.

3. Gaine de guidage selon la revendication 2, **caractérisée en ce que** les axes **(25₁, 25₂)** des organes de roulement, faisant partie d'un même ensemble de guidage, sont parallèles entre eux.

4. Gaine de guidage selon l'une des revendications 1 à 3 **caractérisée en ce qu**'elle comporte des moyens de butée **(40)** permettant de limiter l'amplitude d'articulation des premiers et des deuxièmes moyens d'articulation.

5. Gaine de guidage selon l'une des revendications 1 à 4, **caractérisée en ce qu'**elle comporte une enveloppe de protection **(50)** dans laquelle sont montés les supports **(10₁, 10₂)** des premiers et deuxièmes ensembles de guidage.

6. Gaine de guidage selon la revendication 5, **caractérisée an ce que** l'enveloppe de protection **(50)** intègre un ressort **(51).**

7. Système d'avance (4) d'un fil à l'aide de moyens d'entraînement (7), **caractérisée en ce qu'**il comporte une gaine de guidage **(1)** pour le fil **(2),** conforme à l'une des revendications 1 à 6, disposée entre le lieu de stockage du fil et le lieu d'utilisation du fil.

## Patentansprüche

1. Mantel zur Führung eines Drahtes (2), der sich in einer gegebenen Vorschubrichtung in einem innerhalb des Mantels ausgebildeten Führungskanal (3) bewegt, wobei der Mantel umfasst:
• Träger eines ersten Typs (10₁) für erste Führungsanordnungen (11₁) für den Draht, die jeweils Rollorgane (23₁) umfassen, welche einander gegenüberliegend angeordnet sind, um zwischen ihnen einen Teil des Kanals zur Führung des Drahtes zu definieren, wobei jedes Rollorgan drehfrei um eine von einem Träger getragene Achse (25₁) angebracht ist,
**dadurch gekennzeichnet, dass** er Träger eines zweiten Typs (10₂) für zweite Führungsanordnungen (11₂) für den Draht umfasst, die jeweils Rollorgane (23₂) umfassen, welche einerseits einander gegenüberliegend angeordnet sind, um zwischen ihnen einen Teil des Kanals zur Führung des Drahtes zu definieren, und andererseits jeweils drehfrei um eine von dem Träger getragene Achse (25₂) angeordnet sind, wobei wenigstens eine der Achsen eines Rollorgans der zweiten Führungsanordnungen in einer anderen Richtung als wenigstens eine Achse eines Rollorgans der ersten Führungsanordnungen verläuft, wobei die Träger der zweiten Führungsanordnungen mit den Trägern der ersten Führungsanordnungen abwechselnd angeordnet sind, und
• für jeden Träger eines Typs, der von vorgeordneten und nachgeordneten Trägern eines anderen Typs eingerahmt ist, erste Anlenkmittel (15) entlang wenigstens einer Anlenkrichtung (A) zwischen einem Träger eines Typs und dem vorgeordneten Träger eines anderen Typs sowie zweite Anlenkmittel (17) zwischen dem Träger eines Typs und dem nachgeordneten Träger eines anderen Typs, entlang wenigstens einer von der Anlenkrichtung zwischen dem Träger und dem vorgeordneten Träger abweichenden Anlenkrichtung (B), wobei die ersten (15) und die zweiten (17) Anlenkmittel durch ein Gelenk gleicher Art, wie einem Drehgelenk, Kugelgelenk oder elastischen Gelenk realisiert sind,
• wobei die Träger des ersten Typs (10₁) der ersten Führungsanordnungen (11₁) mit den Trägern (10₂) des zweiten Typs der zweiten Führungsanordnungen (11₂) identisch sind, wobei jeder Träger (10₁, 10₂) der Führungsanordnungen mit einem Führungsrohr (30₁, 30₂) für den Draht (2) ausgestattet ist, das sich zwischen der von dem Träger getragenen Führungsanordnung und der von dem vorgeordneten oder nachgeordneten Träger getragenen Führungsanordnung erstreckt.

2. Führungsmantel nach Anspruch 1, **dadurch gekennzeichnet, dass** wenigstens eine der Achsen eines Rollorgans (23₁, 23₂) der zweiten Führungsanordnungen (11₂) sich in einer Richtung erstreckt, die zu der Richtung wenigstens einer Achse eines Rollorgans der ersten Führungsanordnungen (11₁) senkrecht verläuft, und dass die ersten (15) und zweiten (17) Anlenkmittel wenigstens senkrecht zueinander verlaufende Anlenkrichtungen aufweisen.

3. Führungsmantel nach Anspruch 2, **dadurch gekennzeichnet, dass** die Achsen (25₁, 25₂) der Rollorgane, die zu einer gleichen Führungsanordnung gehören, parallel zueinander verlaufen.

4. Führungsmantel nach einem der Ansprüche 1 bis 3, **dadurch gekennzeichnet, dass** er Anschlagmittel (40) umfasst, die ermöglichen, den Gelenkausschlag der ersten und der zweiten Anlenkmittel zu begrenzen.

5. Führungsmantel nach einem der Ansprüche 1 bis 4, **dadurch gekennzeichnet, dass** er eine Schutzhülle (50) umfasst, in der die Träger (10₁, 10₂) der ersten und zweiten Führungsanordnungen angebracht sind.

6. Führungsmantel nach Anspruch 5, **dadurch gekennzeichnet, dass** in die Schutzhülle (50) eine Feder (51) integriert ist.

7. System für den Vorschub (4) eines Drahtes mit Hilfe von Antriebsmitteln (7), **dadurch gekennzeichnet, dass** es einen Führungsmantel (1) für den Draht (2) nach einem der Ansprüche 1 bis 6 umfasst, der zwischen dem Lagerungsort des Drahtes und dem Verwendungsort des Drahtes angeordnet ist.

## Claims

1. A cable casing for the guidance of a wire **(2)** moving with a given direction of motion in a guidance path **(3)** created within the cable casing, said cable casing including:
▪ supports of a first type **(10₁)** for first guidance assemblies **(11₁)** for the wire, with each including roller devices **(23₁)** mounted facing each other to form between them a part of the guidance path of the wire, and with each roller device being mounted to rotate freely on an axis **(25₁)** carried by a support,
the cable casing being **characterized in that** it includes:
▪ supports of a second type **(10₂)** for second guidance assemblies **(11₂)** for the wire, each including roller devices **(23₂)** mounted, firstly, facing each other to form between them a part of the guidance path of the wire, and secondly, each free to rotate on an axis **(25₂)** carried by the support, at least one of the axes of a roller device of the second guidance assemblies lying in a direction that is different from that of at least one axis of a roller device of the first guidance assemblies, the supports of the second guidance assemblies being positioned alternately with the supports of the first guidance assemblies; and
for each support of a type framed by supports upstream and downstream of another type, first articulation means **(15)** in at least one direction of articulation **(A)** between a support of one type with the upstream support of another type, and second articulation means **(17)** between the said support of one type with the downstream support of another type, in at least one direction of articulation that is different from the direction of articulation **(B)** between the said support and the upstream support, the first **(15)** and the second **(17)** articulation means being created by an articulation of the same type, such as of the pivot, swivel or elastic type,
▪ the supports of first type **(10₁)** of the first guidance assemblies **(11₁)** being identical to the supports **(10₂)** of a second type of the second guidance assemblies **(11₂),** each support **(10₁, 10₂)** of the guidance assemblies being equipped with a guidance tube **(30₁, 30₂)** for the wire **(2)** lying between the guidance assembly carried by the said support and the guidance assembly carried by the support downstream or upstream.

2. A guidance cable casing according to claim 1, **characterized in that** at least one of the axes of a roller device **(23₁, 23₂)** of the second guidance assemblies **(11₂)** lies in a direction perpendicular to that of at least one axis of a roller device of the first guidance assemblies **(11₁)**, and **in that** the first **(15)** and second **(17)** articulation means have directions of articulation that are at least perpendicular to each other.

3. A guidance cable casing according to claim 2, **characterized in that** the axes **(25₁, 25₂)** of the roller devices, forming part of a given guidance assembly, are parallel to each other.

4. A guidance cable casing according to any of claims 1 to 3, **characterized in that** it includes travel-limiting means **(40)** that can be used to limit the amplitude of articulation of the first and the second articulation means.

5. A guidance cable casing according to any of claims 1 to 4, **characterized in that** it includes a protective envelope **(50)** in which the supports **(10₁, 10₂)** of the first and second guidance assemblies are mounted.

6. A guidance cable casing according to claim 5, **characterized in that** the protective envelope **(50)** includes a spring **(51).**

7. A movement system **(4)** for a wire, using driving means **(7), characterized in that** it includes a guidance cable casing **(1)** for the wire **(2),** according to any of claims 1 to 6, positioned between the storage location of the wire and the place of use of the wire.
